# EUROPEAN PATENT SPECIFICATION

(11) **EP 4 479 926 B1**
(45) Date of publication and mention of the grant of the patent: **13.05.2026**
(21) Application number: 23709023.8
(22) Date of filing: 14.02.2023
(51) Int. Cl.: G06T 3/4038, G06T 11/00, G06T 19/00

(54) **TURNING A TWO-DIMENSIONAL IMAGE INTO A SKYBOX**
UMWANDLUNG EINES ZWEIDIMENSIONALEN BILDES IN EIN HIMMELBOX
ROTATION D'UNE IMAGE BIDIMENSIONNELLE DANS UNE CAISSE

(30) Priority: 14.02.2022 US 202263309767 P; 13.02.2023 US 202318168355
(43) Date of publication of application: 25.12.2024
(73) Proprietor: Meta Platforms, Inc., Menlo Park, CA 94025 (US)
(72) Inventor: CANDIDO, Salvatore, Menlo Park, California 94025 (US); CHEUNG, Vincent Charles, Menlo Park, California 94025 (US); ZHANG, Jiemin, Menlo Park, California 94025 (US); TSENG, Hung-Yu, Menlo Park, California 94025 (US)
(74) Representative: Murgitroyd & Company
(86) International application number: PCT/US2023/013020
(87) International publication number: WO 2023/154560

(56) References cited:
- US-A1- 2021 192 684
- KYUNGHUN KIM ET AL: "Painting Outside as Inside: Edge Guided Image Outpainting via Bidirectional Rearrangement with Progressive Step Learning", ARXIV.ORG, CORNELL UNIVERSITY LIBRARY, 201 OLIN LIBRARY CORNELL UNIVERSITY ITHACA, NY 14853, 9 November 2020 (2020-11-09), XP081808320

## Description

### TECHNICAL FIELD

The present disclosure relates to techniques for building a skybox for an XR world from a user-selected 2D image.

### BACKGROUND

Many people are turning to the promise of artificial reality ("XR"): XR worlds expand users' experiences beyond their real world, allow them to learn and play in new ways, and help them connect with other people. An XR world becomes familiar when its users customize it with particular environments and objects that interact in particular ways among themselves and with the users. As one aspect of this customization, users may choose a familiar environmental setting to anchor their world, a setting called the "skybox." The skybox is the distant background, and it cannot be touched by the user, but in some implementations it may have changing weather, seasons, night and day, and the like. Creating even a static realistic skybox is beyond the abilities of many users.

US 2021/192684 A1 describes apparatuses, systems, and techniques to generate panoramas from individual images. One or more generative neural networks are used to generate a spherical panoramic image using features extracted from a single input image.

KYUNGHUN KIM ET AL: "Painting Outside as Inside: Edge Guided Image Outpainting via Bidirectional Rearrangement with Progressive Step Learning", ARXIV.ORG, CORNELL UNIVERSITY LIBRARY, 201 OLIN LIBRARY CORNELL UNIVERSITY ITHACA, NY 14853, 9 November 2020, also describes relevant technical schemes.

### SUMMARY OF THE DISCLOSURE

In accordance with a first aspect of the present disclosure, there is provided a method according to claim 1.

In some embodiments, the method may further comprise: receiving instructions, from a user, to execution an application configured for the creation of skyboxes.

In some embodiments, said instructions may be received following detection of an interaction of the user with one or more virtual control elements within an artificial reality environment.

In some embodiments, the interaction may include one or more of: the user looking at a said virtual control element; the user pointing at a said virtual control element; the user touching a said virtual control element.

In some embodiments, the instructions may be received following detection of a verbal command from the user.

In some embodiments, the two portions of the 2D image may be of equal dimensions.

In some embodiments, the two portions of the 2D image may be of different dimensions.

In some embodiments, the swapping of positions of the two portions includes providing the space between the two portions.

In accordance with a further aspect of the present disclosure, there is provided a system arranged to perform the method of the first aspect.

In some embodiments, the system may comprise an artificial reality system.

In some embodiments, the artificial reality system may comprise a head mounted display (HMD) having a display arranged to display the skybox to a user.

In some embodiments, the HMD may be connected to a host computer.

In some embodiments, the HMD may be a standalone HMD.

In accordance with a further aspect of the present disclosure, there is provided a computer program product comprising instructions which, when executed by a processor, cause the processor to carry out the steps of a method of the first aspect.

In accordance with a further aspect of the present disclosure, there is provided a computer-readable storage medium storing instructions that, when executed by a computing system, cause the computing system to perform the method of the first aspect.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

Figure 1A is a conceptual drawing of a 2D image to be converted into a skybox.
Figures 1B through 1F are conceptual drawings illustrating steps in a process according to the present technology for converting a 2D image into a skybox.
Figure 1G is a conceptual drawing of a completed skybox.
Figure 2 is a flow diagram illustrating a process used in some implementations of the present technology for converting a 2D image into a skybox.
Figure 3 is a block diagram illustrating an overview of devices on which some implementations of the present technology can operate.
Figure 4A is a wire diagram illustrating a virtual reality headset which can be used in some implementations of the present technology.
Figure 4B is a wire diagram illustrating a mixed reality headset which can be used in some implementations of the present technology.
Figure 4C is a wire diagram illustrating controllers which, in some implementations, a user can hold in one or both hands to interact with an artificial reality environment.
Figure 5 is a block diagram illustrating an overview of an environment in which some implementations of the present technology can operate.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to techniques for building a skybox for an XR world from a user-selected 2D image. The 2D image is split into multiple portions. Each portion is mapped to an area on the interior of a virtual enclosed 3D shape. A generative adversarial network then interpolates from the information in areas mapped from the portions of the 2D image to fill in at least some of the unmapped areas of the interior of the 3D shape. When complete, the 3D shape becomes the skybox of the user's XR world.

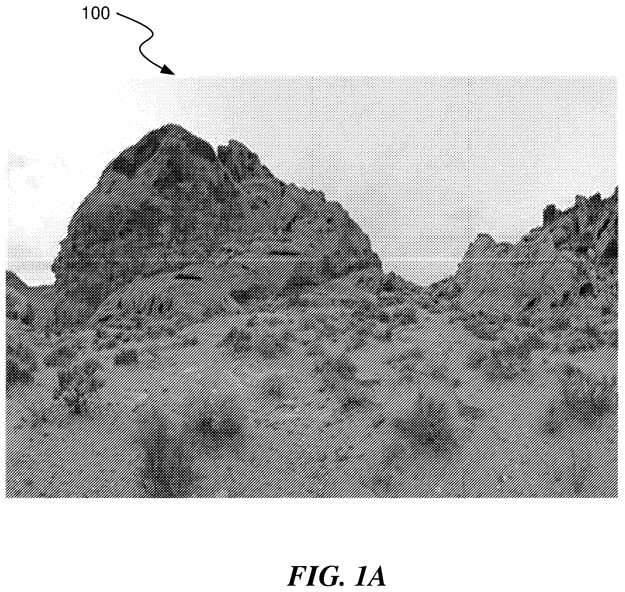

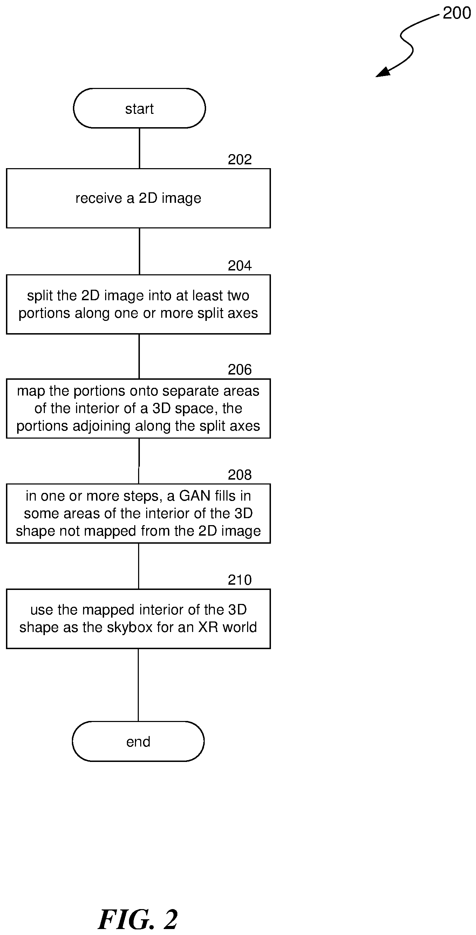

This process is illustrated in conjunction with Figures 1A through 1G and explained more thoroughly in the text accompanying Figure 2. The example of the Figures assumes that the 2D image is mapped onto the interior of a 3D cube. In some implementations, other geometries such as a sphere, half sphere, etc. can be used.

Figure 1A shows a 2D image 100 selected by a user to use as the skybox backdrop. While the user's choice is free, in general this image 100 is a landscape seen from afar with an open sky above. The user can choose an image 100 to impart a sense of familiarity or of exoticism to his XR world.

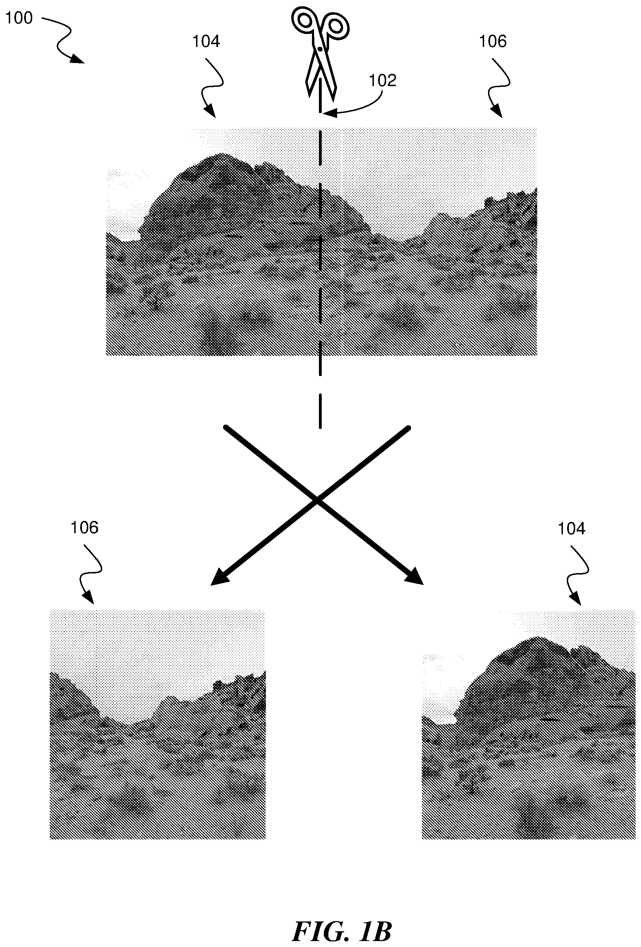

The top of Figure 1B illustrates the first step of the skybox-building process. The image 100 is split into multiple portions along split line 102. Here, the split creates a left portion 104 and a right portion 106. While Figure 1B shows an even split into exactly two portions 104 and 106, that is not required. The bottom of Figure 1B shows the potions 104 and 106 logically swapped left to right.

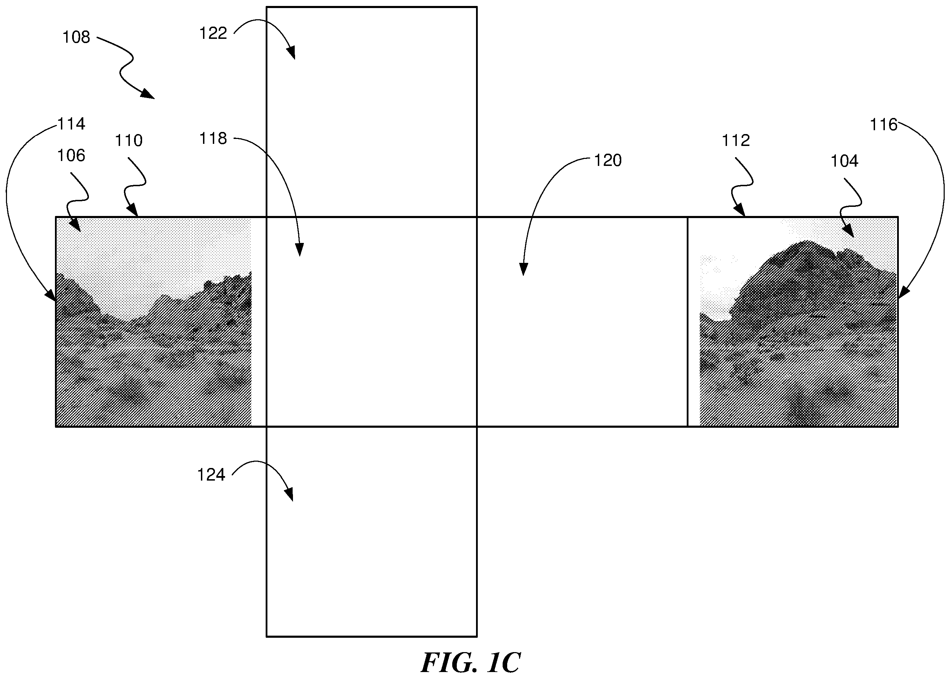

In Figure 1C, the portions 104 and 106 are mapped onto interior faces of a virtual cube 108. The cube 108 is shown as unfolded, which can allow a GAN, trained to fill in the portions for a flat image, to fill in portions of the cube. The portion 106 from the right side of the 2D image 100 is mapped onto cube face 110 on the left of Figure 1C, and the portion 104 from the left side of the 2D image 100 is mapped onto the cube face 112 on the right of Figure 1C. Note that the mapping of the portions 104 and 106 onto the cube faces 112 and 110 need not entirely fill in those faces 112 and 110. Note also that when considering the cube 108 folded up with the mappings inside of it, the outer edge 114 of cube face 110 lines up with the outer edge 116 of cube face 112. These two edges 114 and 116 represent the edges of the portions 106 and 104 along the split line 102 illustrated in Figure 1B. Thus, the mapping shown in Figure 1C preserves the continuity of the 2D image 100 along the split line 102.

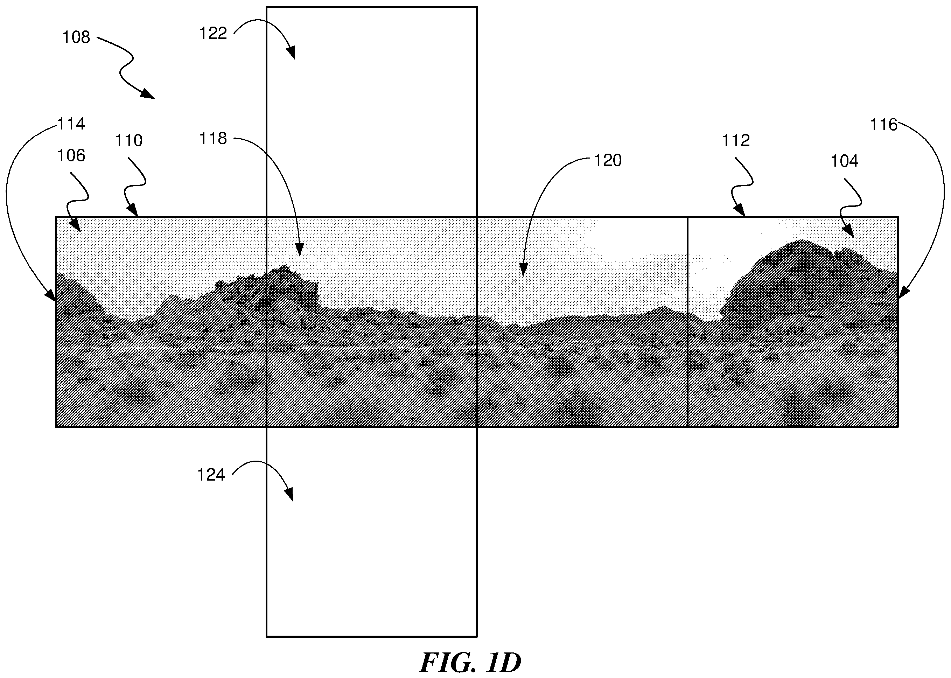

In Figure 1D, a generative adversarial network "fills in" the area between the two portions 106 and 104. In Figure 1D, the content generated by the generative adversarial network has filled in the rightmost part of cube face 110 (which was not mapped in the example of Figure 1C), the leftmost part of cube face 112 (similarly not mapped), and the entirety of cube faces 118 and 120. By using artificial-intelligence techniques, the generative adversarial network produces realistic interpolations here based on the aspects shown in the image portions 106 and 104.

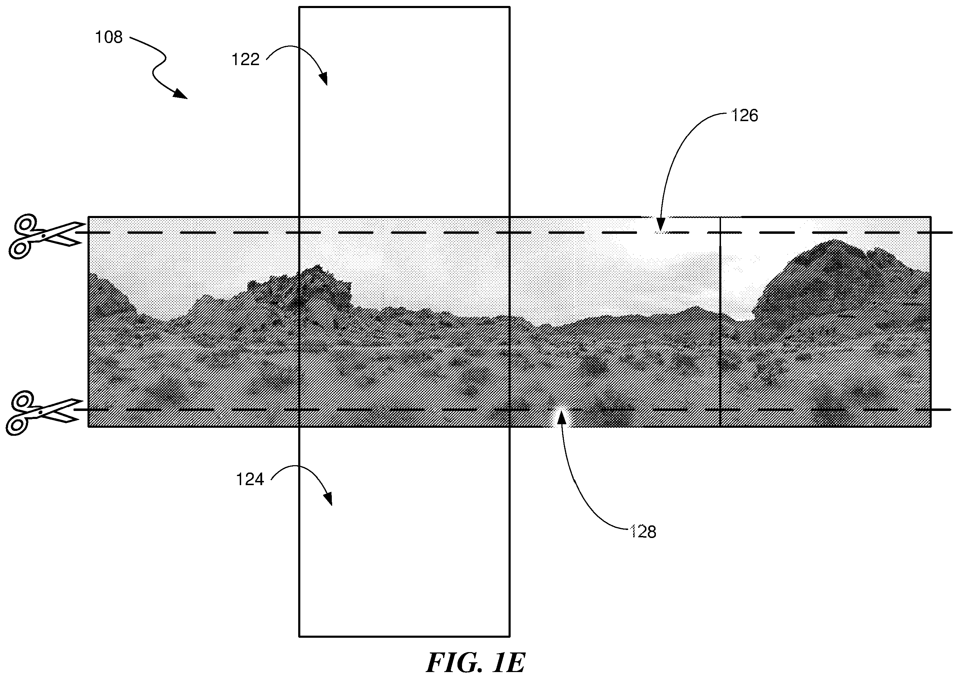

In some implementations, the work of the generative adversarial network is done when the interpolation of Figure 1D is accomplished. In other cases, the work proceeds to Figures 1E through 1G.

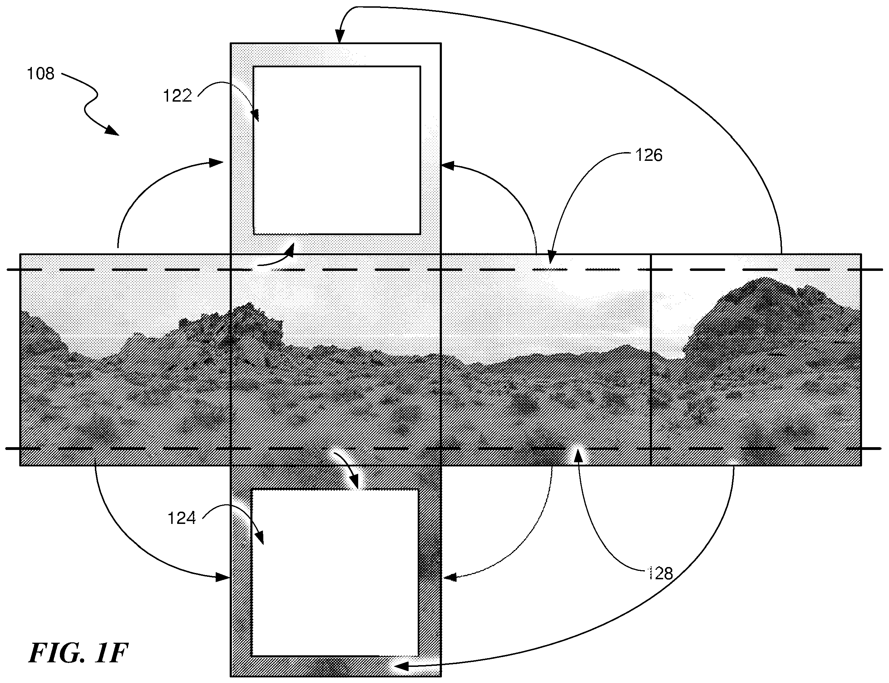

In Figure 1E, the system logically "trims" the work so far produced along a top line 126 and a bottom line 128. The arrows of Figure 1F show how the generative adversarial network maps the trimmed portions to the top 122 and bottom 124 cube faces. In the illustrated case, the top trimmed portions include only sky, and the bottom trimmed portions include only small landscape details but no large masses.

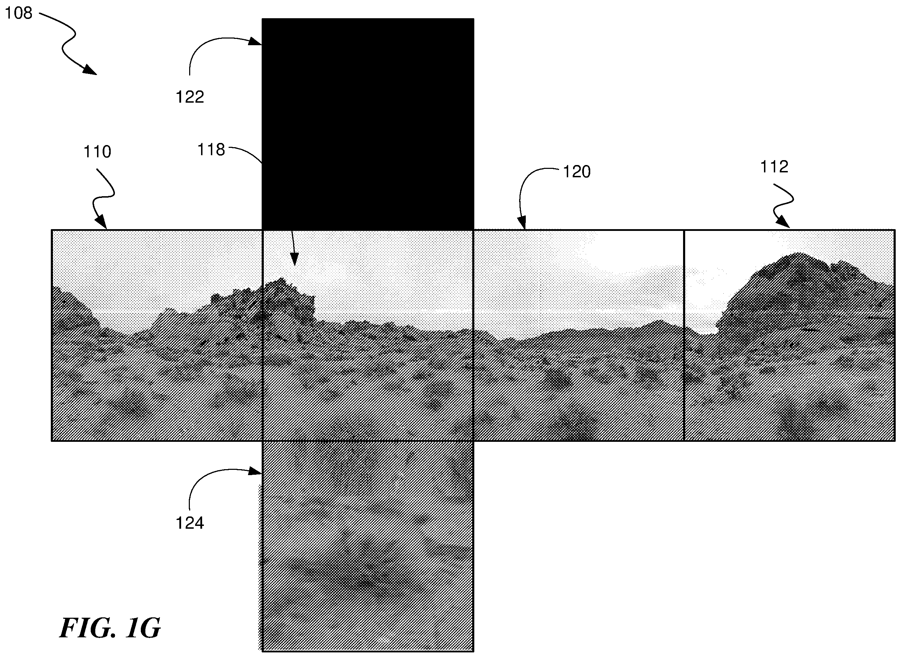

From the trimmed portions added in Figure 1F, the generative adversarial network in Figure 1G again applies artificial-intelligence techniques to interpolate and thus to fill in the remaining portions of top 122 and bottom 124 cube faces.

The completed cube 108 is shown in Figure 1G with the mapped areas on the cube 108's interior. It is ready to become a skybox in the user's XR world. The four cube faces 110, 118, 120, and 112 become the far distant horizon view of the world. The top cube face 122 is the user's sky, and the bottom cube face 124 (if used, see the discussion below) becomes the ground below him. When placed in the user's XR world, the edges of the skybox cube 108 are not visible to the user and do not distort the view.

Figure 2 is a flow diagram illustrating a process 200 used in some implementations for building a skybox from a 2D image. In some variations, process 200 begins when a user executes an application for the creation of skyboxes. In some implementations, this can be from within an artificial reality environment where the user can initiate process 200 by interacting with one or more virtual objects. The user's interaction can include looking at, pointing at, or touching the skybox-creation virtual object (control element). In some variations, process 200 can begin when the user verbally expresses a command to create a skybox, and that expression is mapped into a semantic space (e.g., by applying an NLP model) to determine the user's intent from the words of the command.

At block 202, process 200 receives a 2D image, such as the image 100 in Figure 1A. The image may (but is not required to) include an uncluttered sky that can later be manipulated by an application to show weather, day and night, and the like.

At block 204, process 200 splits the received image 100 into at least two portions. Figure 1B shows the split as a vertical line 102, but that need not be the case. The split also need not produce equal-size portions. However, for a two-way split, the split should leave the entirety of one side of the image in one portion and the entirety of the other side in the other portion. The split line 102 of Figure 1B acceptably splits the 2D image 100.

At block 206, process 200 creates a panoramic image from the split image. This can include swapping the positions of the image along the split line, spreading them apart and having a GAN fill in the area between them. In some cases, this can include mapping the portions resulting from the split onto separate areas on the interior of a 3D space. For the example if the 3D space is a virtual cube 108, the mappings need not completely fill the interior faces of the cube 108. In any case, the portions are mapped so that the edges of the portions at the split line(s) 102 match up with one another. For the example of Figures 1A through 1G, Figure 1C shows the interior of the cube 108 with portion 104 mapped onto most of cube face 112 and portion 106 mapped onto most of cube face 110. Considering the cube 108 as folded up with the mapped images on the interior, the left edge 114 of cube face 110 matches up with the right edge 116 of cube face 112. That is, the original 2D image is once again complete but spread over the two cube faces 110 and 112. In more complicated mappings of more than two portions or of a non-cubical 3D shape, the above principle of preserving image integrity along the split lines still applies.

At block 208, process 200 invokes a generative adversarial network to interpolate and fill in areas of the interior of the 3D shape not already mapped from the portions of the 2D image. This may be done in steps with the generative adversarial network mapping always interpolating into the space between two or more known edges. In the cube 108 example of Figure 1C, the generative adversarial network as a first step applies artificial-intelligence techniques to map the space between the right edge of the portion 106 and the left edge of the portion 104. An example of the result of this interpolated mapping is shown in Figure 1D.

Process 200 can then take a next step by interpolating from the edges of the already mapped areas into any unmapped areas. This process may continue through several steps with the generative adversarial network always interpolating between known information to produce realistic results. Following the example result of Figure 1D, process 200 can interpolating from the edges of the already mapped areas. In Figure 1F, this means moving the mapped areas above the upper logical trim line 126 to create known border areas for the top interior face 122 of the 3D cube 108, and moving the mapped areas below the lower logical trim line 128 to create known border areas for the bottom interior cube face 124. The generative adversarial network can then be applied to fill in these areas. The result in this is the complete skybox, as is shown in Figure 1G.

The step by step interpolative process of the generative adversarial network described above need not always continue until the entire of the interior of the 3D shape is filled in. For example, if the XR world includes an application that creates sky effects for the skybox, then the sky need not be filled in by the generative adversarial network but could be left to that application. In some cases, the ground beneath the user need not be filled in as the user's XR world may has its own ground.

At block 210, the mapped interior of the 3D shape is used as a skybox in the user's XR world.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

Previous systems do not support non-tech-savvy users in creating a skybox for their XR world. Instead, many users left the skybox blank or choose one ready made. Lacking customizability, these off-the-shelf skyboxes made the user's XR world look foreign and thus tended to disengage users from their own XR world. The skybox creation systems and methods disclosed herein are expected to overcome these deficiencies in existing systems. Through the simplicity of its interface (the user only has to provide a 2D image), the skybox creator helps even unsophisticated users to add a touch of familiarity or of exoticness, as they choose, to their world. There is no analog among previous technologies for this ease of user-directed world customization. By supporting every user's creativity, the skybox creator eases the entry of all users into the XR worlds, thus increasing the participation of people in the benefits provided by XR, and, in consequence, enhancing the value of the XR worlds and the systems that support them.

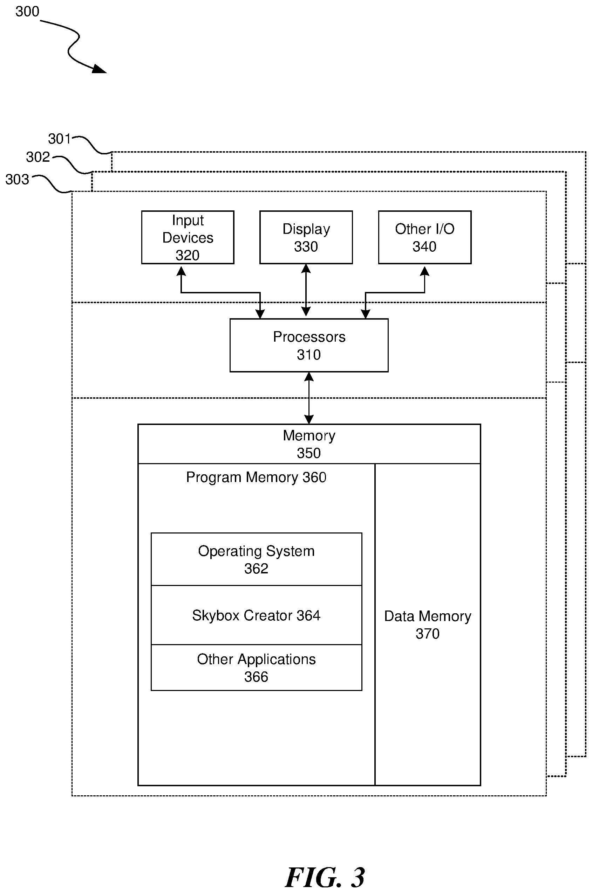

Several implementations are discussed below in more detail in reference to the figures. Figure 3 is a block diagram illustrating an overview of devices on which some implementations of the disclosed technology can operate. The devices can comprise hardware components of a computing system 300 that converts a 2D image into a skybox. In various implementations, computing system 300 can include a single computing device 303 or multiple computing devices (e.g., computing device 301, computing device 302, and computing device 303) that communicate over wired or wireless channels to distribute processing and share input data. In some implementations, computing system 300 can include a stand-alone headset capable of providing a computer created or augmented experience for a user without the need for external processing or sensors. In other implementations, computing system 300 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 300 can include one or more processor(s) 310 (e.g., central processing units (CPUs), graphical processing units (GPUs), holographic processing units (HPUs), etc.) Processors 310 can be a single processing unit or multiple processing units in a device or distributed across multiple devices (e.g., distributed across two or more of computing devices 301-303).

Computing system 300 can include one or more input devices 320 that provide input to the processors 310, notifying them of actions. The actions can be mediated by a hardware controller that interprets the signals received from the input device and communicates the information to the processors 310 using a communication protocol. Each input device 320 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 310 can be coupled to other hardware devices, for example, with the use of an internal or external bus, such as a PCI bus, SCSI bus, or wireless connection. The processors 310 can communicate with a hardware controller for devices, such as for a display 330. Display 330 can be used to display text and graphics. In some implementations, display 330 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 340 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 340, such as cameras, depth sensors, IMU sensor, GPS units, LiDAR or other time-of-flights sensors, etc. can be used by the computing system 300 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 300 or another computing system that had mapped the area. The SLAM system can track the user within the area based on factors such as GPS data, matching identified objects and structures to mapped objects and structures, monitoring acceleration and other position changes, etc.

Computing system 300 can include a communication device capable of communicating wirelessly or wire-based with other local computing devices or a network node. The communication device can communicate with another device or a server through a network using, for example, TCP/IP protocols. Computing system 300 can utilize the communication device to distribute operations across multiple network devices.

The processors 310 can have access to a memory 350, which can be contained on one of the computing devices of computing system 300 or can be distributed across of the multiple computing devices of computing system 300 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 350 can include program memory 360 that stores programs and software, such as an operating system 362, a Skybox creator 364 that works from a 2D image, and other application programs 366. Memory 350 can also include data memory 370 that can include, e.g., parameters for running an image-converting generative adversarial network, configuration data, settings, user options or preferences, etc., which can be provided to the program memory 360 or any element of the computing system 300.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

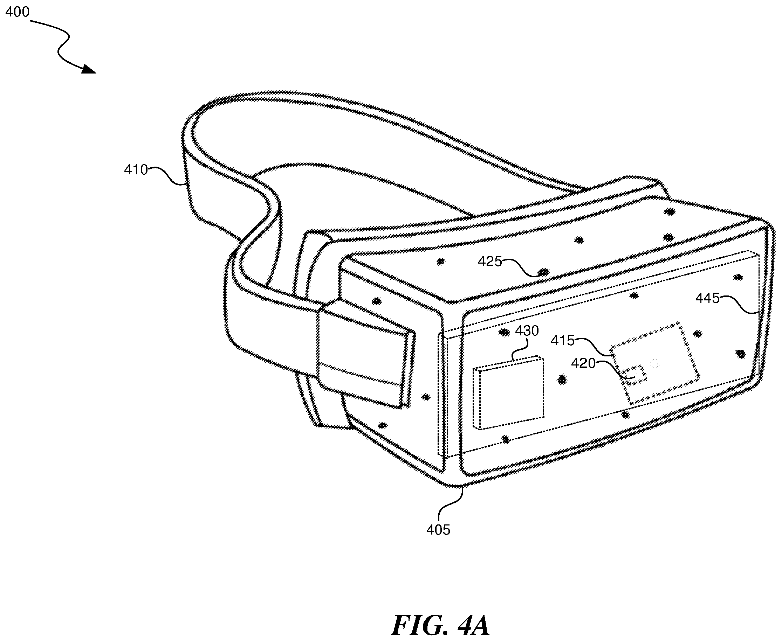

Figure 4A is a wire diagram of a virtual reality head-mounted display (HMD) 400, in accordance with some embodiments. The HMD 400 includes a front rigid body 405 and a band 410. The front rigid body 405 includes one or more electronic display elements of an electronic display 445, an inertial motion unit (IMU) 415, one or more position sensors 420, locators 425, and one or more compute units 430. The position sensors 420, the IMU 415, and compute units 430 may be internal to the HMD 400 and may not be visible to the user. In various implementations, the IMU 415, position sensors 420, and locators 425 can track movement and location of the HMD 400 in the real world and in an artificial reality environment in three degrees of freedom (3DoF) or six degrees of freedom (6DoF). For example, the locators 425 can emit infrared light beams which create light points on real objects around the HMD 400. As another example, the IMU 415 can include e.g., one or more accelerometers, gyroscopes, magnetometers, other non-camera-based position, force, or orientation sensors, or combinations thereof. One or more cameras (not shown) integrated with the HMD 400 can detect the light points. Compute units 430 in the HMD 400 can use the detected light points to extrapolate position and movement of the HMD 400 as well as to identify the shape and position of the real objects surrounding the HMD 400.

The electronic display 445 can be integrated with the front rigid body 405 and can provide image light to a user as dictated by the compute units 430. In various embodiments, the electronic display 445 can be a single electronic display or multiple electronic displays (e.g., a display for each user eye). Examples of the electronic display 445 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 400 can be coupled to a core processing component such as a personal computer (PC) (not shown) and/or one or more external sensors (not shown). The external sensors can monitor the HMD 400 (e.g., via light emitted from the HMD 400) which the PC can use, in combination with output from the IMU 415 and position sensors 420, to determine the location and movement of the HMD 400.

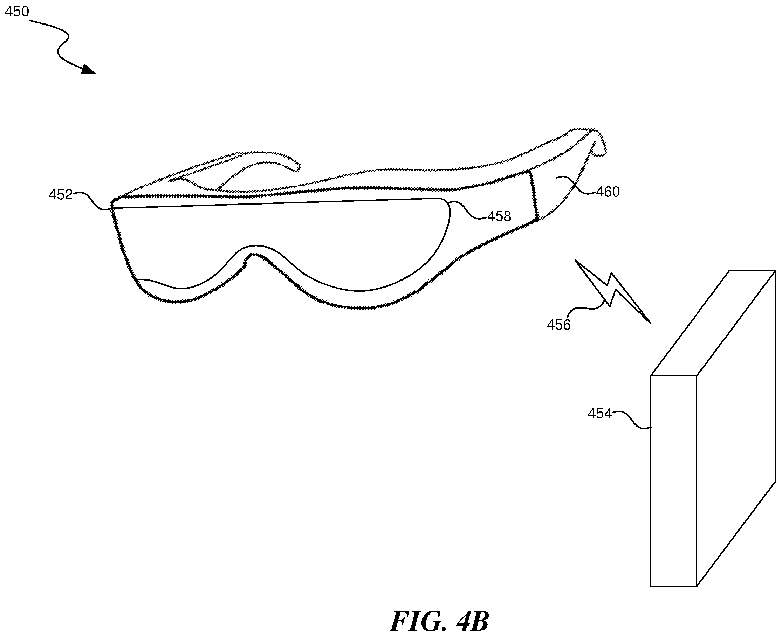

Figure 4B is a wire diagram of a mixed reality HMD system 450 which includes a mixed reality HMD 452 and a core processing component 454. The mixed reality HMD 452 and the core processing component 454 can communicate via a wireless connection (e.g., a 60 GHz link) as indicated by link 456. In other implementations, the mixed reality system 450 includes a headset only, without an external compute device or includes other wired or wireless connections between the mixed reality HMD 452 and the core processing component 454. The mixed reality HMD 452 includes a pass-through display 458 and a frame 460. The frame 460 can house various electronic components (not shown) such as light projectors (e.g., LASERs, LEDs, etc.), cameras, eye-tracking sensors, MEMS components, networking components, etc.

The projectors can be coupled to the pass-through display 458, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 454 via link 456 to HMD 452. Controllers in the HMD 452 can convert the image data into light pulses from the projectors, which can be transmitted via the optical elements as output light to the user's eye. The output light can mix with light that passes through the display 458, allowing the output light to present virtual objects that appear as if they exist in the real world.

Similarly to the HMD 400, the HMD system 450 can also include motion and position tracking units, cameras, light sources, etc., which allow the HMD system 450 to, e.g., track itself in 3DoF or 6DoF, track portions of the user (e.g., hands, feet, head, or other body parts), map virtual objects to appear as stationary as the HMD 452 moves, and have virtual objects react to gestures and other real-world objects.

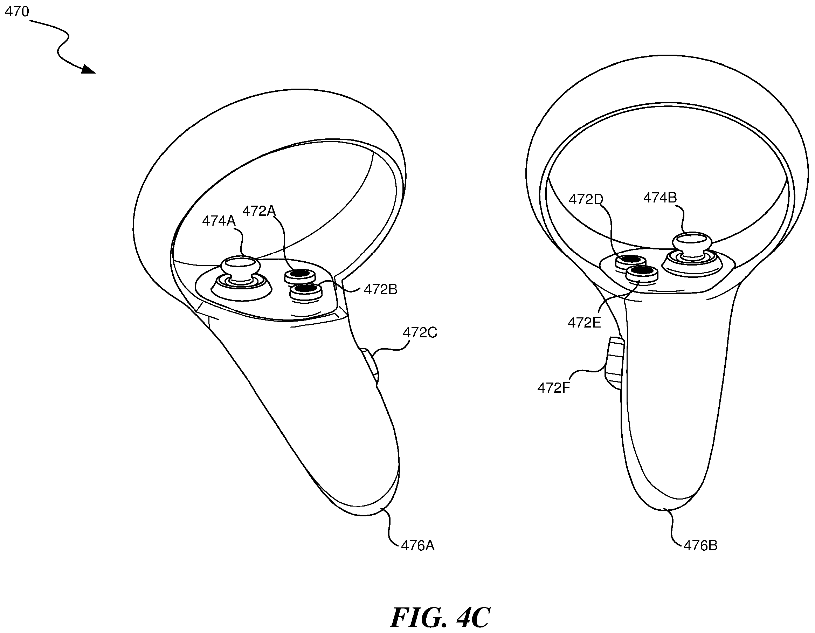

Figure 4C illustrates controllers 470 (including controller 476A and 476B), which, in some implementations, a user can hold in one or both hands to interact with an artificial reality environment presented by the HMD 400 and/or HMD 450. The controllers 470 can be in communication with the HMDs, either directly or via an external device (e.g., core processing component 454). The controllers can have their own IMU units, position sensors, and/or can emit further light points. The HMD 400 or 450, external sensors, or sensors in the controllers can track these controller light points to determine the controller positions and/or orientations (e.g., to track the controllers in 3DoF or 6DoF). The compute units 430 in the HMD 400 or the core processing component 454 can use this tracking, in combination with IMU and position output, to monitor hand positions and motions of the user. The controllers can also include various buttons (e.g., buttons 472A-F) and/or joysticks (e.g., joysticks 474A-B), which a user can actuate to provide input and interact with objects.

In various implementations, the HMD 400 or 450 can also include additional subsystems, such as an eye tracking unit, an audio system, various network components, etc., to monitor indications of user interactions and intentions. For example, in some implementations, instead of or in addition to controllers, one or more cameras included in the HMD 400 or 450, or from external cameras, can monitor the positions and poses of the user's hands to determine gestures and other hand and body motions. As another example, one or more light sources can illuminate either or both of the user's eyes and the HMD 400 or 450 can use eye-facing cameras to capture a reflection of this light to determine eye position (e.g., based on set of reflections around the user's cornea), modeling the user's eye and determining a gaze direction.

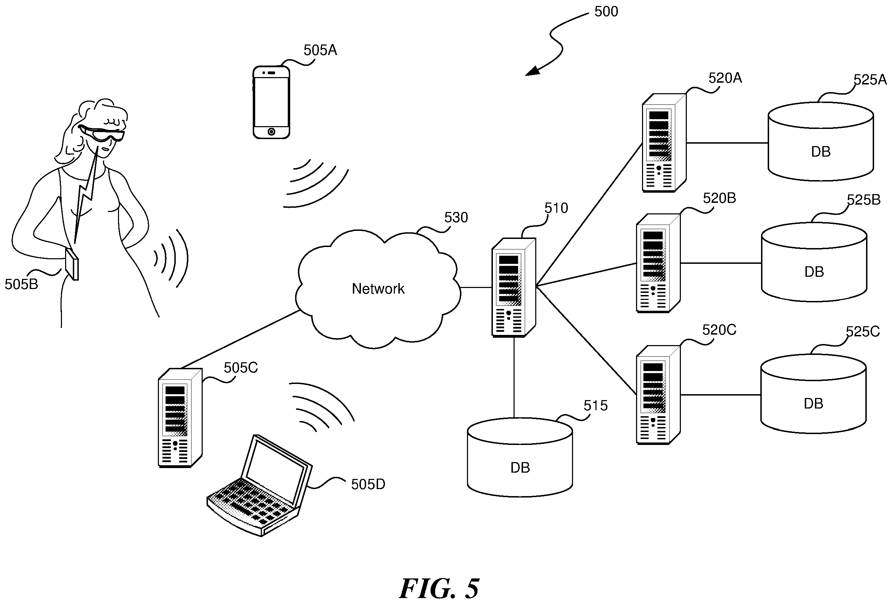

Figure 5 is a block diagram illustrating an overview of an environment 500 in which some implementations of the disclosed technology can operate. Environment 500 can include one or more client computing devices 505A-D, examples of which can include computing system 100. In some implementations, some of the client computing devices (e.g., client computing device 505B) can be the HMD 400 or the HMD system 450. Client computing devices 505 can operate in a networked environment using logical connections through network 530 to one or more remote computers, such as a server computing device.

In some implementations, server 510 can be an edge server which receives client requests and coordinates fulfillment of those requests through other servers, such as servers 520A-C. Server computing devices 510 and 520 can comprise computing systems, such as computing system 100. Though each server computing device 510 and 520 is displayed logically as a single server, server computing devices can each be a distributed computing environment encompassing multiple computing devices located at the same or at geographically disparate physical locations.

Client computing devices 505 and server computing devices 510 and 520 can each act as a server or client to other server/client device(s). Server 510 can connect to a database 515. Servers 520A-C can each connect to a corresponding database 525A-C. As discussed above, each server 510 or 520 can correspond to a group of servers, and each of these servers can share a database or can have their own database. Though databases 515 and 525 are displayed logically as single units, databases 515 and 525 can each be a distributed computing environment encompassing multiple computing devices, can be located within their corresponding server, or can be located at the same or at geographically disparate physical locations.

Network 530 can be a local area network (LAN), a wide area network (WAN), a mesh network, a hybrid network, or other wired or wireless networks. Network 530 may be the Internet or some other public or private network. Client computing devices 505 can be connected to network 530 through a network interface, such as by wired or wireless communication. While the connections between server 510 and servers 520 are shown as separate connections, these connections can be any kind of local, wide area, wired, or wireless network, including network 530 or a separate public or private network.

Those skilled in the art will appreciate that the components illustrated in Figures 3 through 5 described above, and in each of the flow diagrams, may be altered in a variety of ways. For example, the order of the logic may be rearranged, substeps may be performed in parallel, illustrated logic may be omitted, other logic may be included, etc. In some implementations, one or more of the components described above can execute one or more of the processes also described above.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

## Claims

1. A computer-implemented method for producing a skybox in an artificial reality, XR, world from a 2D image, the method comprising:
splitting (204) the 2D image (100) with a split line (102) along an axis into two portions (104, 106);
swapping the positions of the two portions (104, 106);
mapping (206) each portion (104, 106) onto a separate interior face of a 3D cube (108), wherein each interior face is different from the top (122) and bottom (124) face of the 3D cube (108), and wherein the portions (104, 106) are mapped so that the edges of the portions (104, 106) at the split line (102) match up with one another;
applying (208) a generative adversarial network, GAN, to a flat image representing the 3D cube (108) unfolded, to fill in a space between the two portions (104, 106) in order to create a panoramic image mapped onto the four interior faces of the 3D cube (108);
creating a border area of a top face (122) of the 3D cube (108) from the top edge of the four interior faces;
applying the GAN to fill in the top face (122) of the 3D cube (108) based on the created border area of the top face (122); and
applying (210) the 3D cube (108) as a skybox in the XR world.

2. A method as claimed in claim 1, further comprising: receiving instructions, from a user, to execution an application configured for the creation of skyboxes.

3. A method as claimed in claim 2, wherein said instructions are received following detection of an interaction of the user with one or more virtual control elements within an artificial reality environment.

4. A method as claimed in claim 3, wherein the interaction includes one or more of: the user looking at a said virtual control element; the user pointing at a said virtual control element; the user touching a said virtual control element.

5. A method as claimed in claim 2, wherein the instructions are received following detection of a verbal command from the user.

6. A method as claimed in any one of the preceding claims, wherein the two portions (104, 106) of the 2D image are of equal dimensions; or wherein the two portions (104, 106) of the 2D image are of different dimensions.

7. A method as claimed in any one of the preceding claims, wherein the swapping of positions of the two portions (104, 106) includes providing the space between the two portions (104, 106).

8. A system (300) arranged to perform a method as claimed in any one of claims 1 to 7.

9. A system (300) as claimed in claim 8, wherein the system (300) comprises an artificial reality system.

10. A system (300) as claimed in claim 9, wherein the artificial reality system comprises a head mounted display, HMD, (400) having a display (445) arranged to display the skybox to a user.

11. A system (300) as claimed in claim 10, wherein the HMD (400) is connected to a host computer; or wherein the HMD (400) is a standalone HMD.

12. A computer program product comprising instructions which, when executed by a processor, cause the processor to carry out the steps of a method as claimed in any one of claims 1 to 7.

13. A computer-readable storage medium, storing instructions that, when executed by a computing system, cause the computing system to perform a method as claimed in any one of claims 1 to 7.

## Patentansprüche

1. Ein rechnerimplementiertes Verfahren zum Erzeugen einer Skybox in einer Welt der künstlichen Realität, XR-Welt, aus einem 2D-Bild, wobei das Verfahren Folgendes beinhaltet:
Teilen (204) des 2D-Bildes (100) mit einer Teilungslinie (102) entlang einer Achse in zwei Abschnitte (104, 106);
Vertauschen der Positionen der zwei Abschnitte (104, 106);
Abbilden (206) jedes Abschnitts (104, 106) auf eine separate Innenfläche eines 3D-Würfels (108), wobei sich jede Innenfläche von der oberen (122) und der unteren (124) Fläche des 3D-Würfels (108) unterscheidet und wobei die Abschnitte (104, 106) so abgebildet werden, dass die Kanten der Abschnitte (104, 106) an der Teilungslinie (102) miteinander übereinstimmen;
Anwenden (208) eines Generative Adversarial Network, GAN, auf ein flaches Bild, das den entfalteten 3D-Würfel (108) darstellt, um einen Raum zwischen den zwei Abschnitten (104, 106) auszufüllen, um ein Panoramabild zu erstellen, das auf die vier Innenflächen des 3D-Würfels (108) abgebildet ist;
Erstellen eines Grenzbereichs einer oberen Fläche (122) des 3D-Würfels (108) von der oberen Kante der vier Innenflächen;
Anwenden des GAN, um die obere Fläche (122) des 3D-Würfels (108) basierend auf dem erstellten Grenzbereich der oberen Fläche (122) auszufüllen; und
Anwenden (210) des 3D-Würfels (108) als eine Skybox in der XR-Welt.

2. Verfahren gemäß Anspruch 1, das ferner Folgendes beinhaltet: Empfangen von Anweisungen von einem Benutzer, um eine Anwendung auszuführen, die für die Erstellung von Skyboxen konfiguriert ist.

3. Verfahren gemäß Anspruch 2, wobei die Anweisungen nach dem Erkennen einer Interaktion des Benutzers mit einem oder mehreren virtuellen Steuerelementen innerhalb einer Umgebung der künstlichen Realität empfangen werden.

4. Verfahren gemäß Anspruch 3, wobei die Interaktion eines oder mehrere von Folgendem umfasst: der Benutzer schaut auf ein virtuelles Steuerelement; der Benutzer zeigt auf ein virtuelles Steuerelement; der Benutzer berührt ein virtuelles Steuerelement.

5. Verfahren gemäß Anspruch 2, wobei die Anweisungen nach dem Erkennen eines verbalen Befehls von dem Benutzer empfangen werden.

6. Verfahren gemäß einem der vorhergehenden Ansprüche, wobei die zwei Abschnitte (104, 106) des 2D-Bildes gleiche Abmessungen aufweisen; oder wobei die zwei Abschnitte (104, 106) des 2D-Bildes unterschiedliche Abmessungen aufweisen.

7. Verfahren gemäß einem der vorhergehenden Ansprüche, wobei das Vertauschen von Positionen der zwei Abschnitte (104, 106) das Bereitstellen des Raums zwischen den zwei Abschnitten (104, 106) umfasst.

8. Ein System (300), das angeordnet ist, um ein Verfahren gemäß einem der Ansprüche 1 bis 7 durchzuführen.

9. System (300) gemäß Anspruch 8, wobei das System (300) ein System der künstlichen Realität beinhaltet.

10. System (300) gemäß Anspruch 9, wobei das System der künstlichen Realität eine am Kopf montierte Anzeige, HMD, (400) beinhaltet, die eine Anzeige (445) aufweist, die angeordnet ist, um die Skybox einem Benutzer anzuzeigen.

11. System (300) gemäß Anspruch 10, wobei die HMD (400) mit einem Host-Rechner verbunden ist; oder wobei die HMD (400) eine eigenständige HMD ist.

12. Ein Rechnerprogrammprodukt, das Anweisungen beinhaltet, die, wenn sie von einem Prozessor ausgeführt werden, den Prozessor veranlassen, die Schritte eines Verfahrens gemäß einem der Ansprüche 1 bis 7 zu vollziehen.

13. Ein rechnerlesbares Speichermedium, das Anweisungen speichert, die, wenn sie von einem Rechnersystem ausgeführt werden, das Rechnersystem veranlassen, ein Verfahren gemäß einem der Ansprüche 1 bis 7 durchzuführen.

## Revendications

1. Un procédé mis en œuvre par ordinateur pour produire une skybox dans un monde de réalité artificielle, XR, à partir d'une image 2D, le procédé comprenant :
la division (204) de l'image 2D (100) avec une ligne de division (102) le long d'un axe en deux portions (104, 106) ;
l'échange des positions des deux portions (104, 106) ;
le mappage (206) de chaque portion (104, 106) sur une face intérieure distincte d'un cube 3D (108), où chaque face intérieure est différente de la face supérieure (122) et inférieure (124) du cube 3D (108), et où les portions (104, 106) sont mappées de sorte que les bords des portions (104, 106) au niveau de la ligne de division (102) concordent les uns avec les autres ;
l'application (208) d'un réseau antagoniste génératif, GAN, à une image plate représentant le cube 3D (108) déplié, pour remplir un espace entre les deux portions (104, 106) afin de créer une image panoramique mappée sur les quatre faces intérieures du cube 3D (108) ;
la création d'une zone de bordure d'une face supérieure (122) du cube 3D (108) à partir du bord supérieur des quatre faces intérieures ;
l'application du GAN pour remplir la face supérieure (122) du cube 3D (108) sur la base de la zone de bordure créée de la face supérieure (122) ; et
l'application (210) du cube 3D (108) en tant que skybox dans le monde XR.

2. Un procédé tel que revendiqué dans la revendication 1, comprenant en outre : la réception d'instructions, en provenance d'un utilisateur, pour l'exécution d'une application configurée pour la création de skyboxes.

3. Un procédé tel que revendiqué dans la revendication 2, où lesdites instructions sont reçues à la suite de la détection d'une interaction de l'utilisateur avec un ou plusieurs éléments de contrôle virtuels au sein d'un environnement de réalité artificielle.

4. Un procédé tel que revendiqué dans la revendication 3, où l'interaction inclut une ou plusieurs actions parmi celles où : l'utilisateur regarde un dit élément de contrôle virtuel ; l'utilisateur pointe un dit élément de contrôle virtuel ; l'utilisateur touche un dit élément de contrôle virtuel.

5. Un procédé tel que revendiqué dans la revendication 2, où les instructions sont reçues à la suite de la détection d'une commande verbale en provenance de l'utilisateur.

6. Un procédé tel que revendiqué dans n'importe laquelle des revendications précédentes, où les deux portions (104, 106) de l'image 2D sont de dimensions égales ; ou bien où les deux portions (104, 106) de l'image 2D sont de dimensions différentes.

7. Un procédé tel que revendiqué dans n'importe laquelle des revendications précédentes, où l'échange de positions des deux portions (104, 106) inclut la fourniture de l'espace entre les deux portions (104, 106).

8. Un système (300) agencé pour effectuer un procédé tel que revendiqué dans n'importe laquelle des revendications 1 à 7.

9. Un système (300) tel que revendiqué dans la revendication 8, où le système (300) comprend un système de réalité artificielle.

10. Un système (300) tel que revendiqué dans la revendication 9, où le système de réalité artificielle comprend un visiocasque, HMD, (400) ayant une unité d'affichage (445) agencée pour afficher la skybox pour un utilisateur.

11. Un système (300) tel que revendiqué dans la revendication 10, où le HMD (400) est connecté à un ordinateur hôte ; ou bien où le HMD (400) est un HMD autonome.

12. Un produit de programme informatique comprenant des instructions qui, lorsqu'elles sont exécutées par un processeur, amènent le processeur à réaliser les étapes d'un procédé tel que revendiqué dans n'importe laquelle des revendications 1 à 7.

13. Un support de stockage lisible par ordinateur, stockant des instructions qui, lorsqu'elles sont exécutées par un système informatique, amènent le système informatique à effectuer un procédé tel que revendiqué dans n'importe laquelle des revendications 1 à 7.
